# EUROPÄISCHE PATENTANMELDUNG

(11) **EP 1 342 952 A1**
(43) Veröffentlichungstag der Anmeldung: **10.09.2003**
(21) Anmeldenummer: 02005136.3
(22) Anmeldetag: 07.03.2002
(51) Int. Cl.: F23M 13/00, F23R 3/28, F23R 3/14

(54) **Brenner, Verfahren zum Betrieb eines Brenners und Gasturbine**

(71) Anmelder: SIEMENS AKTIENGESELLSCHAFT, 80333 München (DE)
(72) Erfinder: Flohr, Patrick, 45478 Mülheim (DE); Krebs, Werner, Dr., 45481 Muelheim A.D. Ruhr (DE); Schulze, Günther, Dr., 90556 Seukendorf (DE)

(57) **Zusammenfassung**

Die Erfindung betrifft einen Brenner (1), insbesondere einen Gasturbinenbrenner, bei dem ein Helmholtzresonator (19) stromab einer Brennstoffeinleitungsposition (10) unmittelbar mit einem Brennerkanal (3) verbunden ist. Hierdurch gelangen Verbrennungsschwingungen (29) nicht bis zur Brennstoffeinleitungsposition (10), wodurch akustische Störungen und damit Luftzahlschwankungen, die wesentliche Ursache für das Entstehen von Verbrennungsschwingungen (29) sind, verringert werden. Die Erfindung betrifft auch ein Verfahren zum Betrieb eines Brenners (1) und eine Gasturbine (51).

## Beschreibung

### Brenner, Verfahren zum Betrieb eines Brenners und Gasturbine

Die Erfindung betrifft einen Brenner mit einem Brennerkanal, in den Verbrennungsluft an einer Lufteinleitungsposition und Brennstoff an einer Brennstoffeinleitungsposition einleitbar sind, wobei die Brennstoffeinleitungsposition stromab der Lufteinleitungsposition liegt und wobei die Verbrennungsluft mit dem Brennstoff im Brennerkanal mischbar und anschließend in eine Verbrennungszone einleitbar sind. Insbesondere ist der Brenner als Gasturbinenbrenner ausgebildet. Die Erfindung betrifft auch ein Verfahren zum Betrieb eines solchen Brenners sowie eine Gasturbine, insbesondere mit einer Ringbrennkammer.

In Verbrennungssystemen wie Gasturbinen, Flugtriebwerken, Raketenmotoren und Heizungsanlagen kann es zu thermoakustisch induzierten Verbrennungsschwingungen kommen. Diese entstehen durch eine Wechselwirkung der Verbrennungsflamme und der damit verbundenen Wärmefreisetzung mit akustischen Druckschwankungen. Durch eine akustische Anregung kann die Lage der Flamme, die Flammenfrontfläche oder die Gemischzusammensetzung schwanken, was wiederum zu Schwankungen der Wärmefreisetzung führt. Bei konstruktiver Phasenlage kann es zu einer positiven Rückkopplung und Verstärkung kommen. Eine so verstärkte Verbrennungsschwingung kann zu erheblichen Lärmbelastungen und Schädigungen durch Vibrationen führen.

Wesentlich beeinflusst werden diese thermoakustisch hervorgerufenen Instabilitäten durch die akustischen Eigenschaften des Brennraumes und die am Brennraumeintritt und Brennraumaustritt sowie an den Brennkammerwänden vorliegenden Randbedingungen. Die akustischen Eigenschaften können durch den Einbau von Helmholtzresonatoren verändert werden.

Die WO 93/10401 A1 zeigt eine Einrichtung zur Unterdrückung von Verbrennungsschwingungen in einer Brennkammer einer Gasturbinenanlage. Ein Helmholtzresonator ist mit einer Brennstoffzuführleitung strömungstechnisch verbunden. Die akustischen Eigenschaften der Zuführleitung bzw. des akustischen Gesamtsystems werden hierdurch so verändert, dass Verbrennungsschwingungen unterdrückt werden. Es hat sich allerdings gezeigt, dass diese Maßnahme nicht in allen Betriebszuständen ausreicht, da es auch bei einer Unterdrückung von Schwingungen in der Brennstoffleitung zu Verbrennungsschwingungen kommen kann.

Die US-A-6 058 709 schlägt zur Vermeidung von Verbrennungsschwingungen vor, Brennstoff an axial unterschiedlichen Positionen im Brennkanal eines Brenners einzuleiten. Hierdurch werden hinsichtlich der Ausbildung von Verbrennungsschwingungen konstruktive Phasenlagen in der Gemischzusammensetzung durch destruktive überlagert, so dass es insgesamt zu niedrigeren Schwankungen und damit zu einer verringerten Neigung zur Ausbildung von Verbrennungsschwingungen kommt. Diese Maßnahme ist allerdings apparativ im Vergleich zur rein passiven Maßnahme der Verwendung von Helmholtzresonatoren vergleichsweise aufwendig.

In der EP 0 597 138 A1 ist eine Gasturbinen-Brennkammer beschrieben, die im Bereich der Brenner luftgespülte Helmholtzresonatoren aufweist. Durch diese Resonatoren wird Schwingungsenergie von in der Brennkammer auftretenden Verbrennungsschwingungen absorbiert und die Verbrennungsschwingungen werden hierdurch gedämpft.

Eine weitere Maßnahme zur Dämpfung von Verbrennungsschwingungen ist in der EP 1 004 823 A2 gezeigt. Hier ist ein Helmholtzresonator unmittelbar mit dem Mischbereich des Brenners verbunden. Es wird betont und auch ausschließlich offenbart, dass der Resonator stromauf der Brennstoffzuführung anzubringen ist, da durch den Resonator im Brenner entstehende und auch durch die Zuführleitungen hervorgerufene Verbrennungsschwingungen absorbiert werden sollen.

Aufgabe der Erfindung ist die Angabe eines Brenners mit einer besonders geringen Neigung zur Ausbildung von Verbrennungsschwingungen. Weitere Aufgabe der Erfindung ist die Angabe eines Verfahrens zum Betrieb eines Brenners, durch das effizient Verbrennungsschwingungen vermieden werden. Schließlich ist auch Aufgabe der Erfindung die Angabe einer Gasturbine mit besonders geringer Neigung zur Ausbildung von Verbrennungsschwingungen.

Erfindungsgemäß wird die auf einen Brenner gerichtete Aufgabe gelöst durch Angabe eines Brenners mit einem Brennerkanal, in den Verbrennungsluft an einer Lufteinleitungsposition und Brennstoff an einer Brennstoffeinleitungsposition einleitbar sind, wobei die Brennstoffeinleitungsposition stromab der Lufteinleitungsposition liegt und wobei die Verbrennungsluft mit dem Brennstoff im Brennerkanal mischbar und anschließend in eine Verbrennungszone einleitbar sind, wobei ein Helmholtzresonator an einer Resonatorposition mit dem Brennerkanal stromab der Brennstoffeinleitungsposition und stromauf der Verbrennungszone unmittelbar strömungstechnisch so verbunden ist, dass eine Kopplung zwischen Luftzahlschwankungen und Verbrennungsschwingungen weitgehend aufgebrochen wird.

Die Luftzahl ist eine in der Verbrennungstechnik wohlbekannte Größe und kennzeichnet proportional die Gemischzusammensetzung des Gemisches aus Verbrennungsluft und Brennstoff durch das Verhältnis der Konzentrationen.

Erstmalig wird mit der Erfindung der Weg eingeschlagen, eine Verbrennungsschwingung durch einen Helmholtzresonator nicht nur zu dämpfen sondern auch einen wesentlichen Grund für die Entstehung der Verbrennungsschwingung zu unterbinden: Die Schwankungen der Luftzahl. Die Luftzahlschwankung führt durch die zeitlich inhomogene Wärmefreisetzung zu akustischen Impulsen, die nach oben beschriebener Art zu einer Rückkopplung und den Aufbau einer Verbrennungsschwingung führen können. In dem nun der Helmholtzresonator stromab der Brennstoffeinleitung angeordnet wird, werden akustische Störungen an der Brennstoffeinleitungsposition und damit Luftzahlschwankungen verringert. Über die reine Absorption von Schwingungsenergie hinaus vermag der Helmholtzresonator an dieser Resonatorposition also schon das Entstehen der Verbrennungsschwingung zu vermeiden. Hierdurch wird ein sehr viel effizienteres Mittel gegen Verbrennungsschwingungen erreicht.

Vorzugsweise umgibt der Brennerkanal als Ringkanal einen Zentralkanal, durch den getrennt vom Ringkanal Brennstoff und Verbrennungsluft der Verbrennungszone zuführbar sind, wobei der Helmholtzresonator den Ringkanal ebenfalls ringförmig umgibt.

Hierdurch kann der Resonator vollständig und symmetrisch auf dem Ringkanal einwirken. Ungleichmäßige Temperaturverteilungen werden hierdurch vermieden. Durch die Position stromab der Brennstoffzufuhr kann zudem der Resonator unmittelbar auf den Ort der höchsten Wärmefreisetzung einwirken, was zu einer besonders hohen Wirkung des Resonators führt.

Der Brenner kann insbesondere ein kombinierter Diffusionsund Vormischbrenner sein. Dabei wird in dem Ringkanal als Vormischkanal Brennstoff innig mit Verbrennungsluft vermischt. Der Zentralkanal ist als ein Diffusionsbrenner ausgeführt, in dem Luft und Brennstoff im wesentlichen erst in der Verbrennungszone gemischt werden. Ein Vormischbrenner kann durch eine sogenannte magere Verbrennung wenig Brennstoff in viel Luft verbrennen und weist hierdurch geringe Stickoxidemissionen auf. Allerdings ist die magere Verbrennung häufig instabil und neigt verstärkt zur Ausbildung von Verbrennungsschwingungen. Der ringförmige Helmholtzresonator wirkt dem entgegen. Der Diffusionsbrenner verbrennt ein fetteres Gemisch und stabilisiert, falls nötig, die Vormischverbrennung, allerdings für den Preis erhöhter Stickoxidemissionen.

Der Brennerkanal kann auch als Zentralkanal ausgeführt und von einem Ringkanal umgeben sein, durch den getrennt vom Zentralkanal Brennstoff und Verbrennungsluft der Verbrennungszone zuführbar sind, wobei der Helmholtzresonator den Zentralkanal ringförmig umgibt.

In besonders bevorzugter Ausgestaltung können sowohl beim Ringkanal als auch beim Zentralkanal Helmholtzresonatoren jeweils stromab der Brennstoffzuführung angeordnet sein.

Bevorzugt sind im Brennerkanal Drallschaufeln stromauf der Resonatorposition angeordnet. Durch solche Drallschaufeln wird ein die Verbrennung stabilisierender Drall erzeugt. Weiter bevorzugt ist der Brennstoff über die Drallschaufeln einleitbar.

Vorzugsweise sind durch den Helmholtzresonator Verbrennungsschwingungen absorbierbar oder reflektierbar. Während herkömmliche Resonatoren ausschließlich durch Absorption wirken, kann nach dem Konzept der Erfindung auch eine reflektierende Wirkung des Helmholtzresonators Verbrennungsschwingungen verringern, da wie oben ausgeführt eine Reflexion zu einer Verringerung von akustischen Störungen am Brennstoffeinlass und damit zur Verringerung von Luftzahlschwankungen führt.

Bevorzugt weist der Helmholtzresonator ein einstellbares Volumen auf. Hierdurch können die akustischen Eigenschaften eingestellt und somit das Gesamtsystem akustisch abgestimmt werden. Denkbar ist auch eine Einstellung des Druckes, etwa von Luft, im Resonatorvolumen, was ebenfalls die akustischen Eigenschaften verändert und was sogar im Betrieb eingestellt werden könnte.

Vorzugsweise weist der Helmholzresonator ein Resonatorvolumen auf und ist über eine Resonatormündung mit dem Brennerkanal verbunden, wobei die Resonatormündung durch ein Röhrchen in das Resonatorvolumen hinein verlängert ist. Weiter bevorzugt ragen mehrere Röhrchen in das Resonatorvolumen. Das innere Volumen des Resonators wird dabei kaum geändert. Die äußeren Abmessungen des Resonators können somit klein gehalten werden. Die Röhrchen können dabei verwunden ausgeführt werden, um genügend Abstand zu den Wänden zu haben. Durch Veränderung der Länge der Röhrchen kann die Dämpfungsvorrichtung verschiedene Frequenzen, die im Verbrennungssystem auftreten, eingestellt werden. Dabei müssen die äußeren Abmessungen des Resonators und damit des Brenneinsatzes sowie die offene Gesamtquerschnittsfläche nicht geändert werden. Der Hauptvorteil: um tiefe Frequenzen zu dämpfen, kann mit Hilfe der hineinragenden Röhrchen auf eine Volumenvergrößerung des Resonators verzichtet werden.

Bevorzugtermassen ist der Brenner als Gasturbinenbrenner ausgebildet.

Erfindungsgemäß wird die auf eine Gasturbine gerichtete Aufgabe gelöst durch Angabe einer Gasturbine mit einem Brenner nach einer der oben beschriebenen Ausführungen.

Die Vorteile einer solchen Gasturbine entsprechen den Vorteilen, wie sie zum erfindungsgemäßen Brenner beschrieben wurden. In einer Gasturbine sind Verbrennungsschwingungen wegen der hohen Leistungsdichten besonders störend und schädlich. Weiter bevorzugt weist die Gasturbine eine Ringbrennkammer auf. In einer Ringbrennkammer kann es durch den großen, gekoppelten Brennraum leicht zu schweren Verbrennungsschwingungen kommen.

Erfindungsgemäß wird die auf ein Verfahren gerichtete Aufgabe gelöst durch Angabe eines Verfahrens zum Betrieb eines Brenners mit einem Brennerkanal, in den Verbrennungsluft an einer Lufteinleitungsposition und Brennstoff an einer Brennstoffeinleitungsposition eingeleitet werden, wobei die Brennstoffeinleitungsposition stromab der Lufteinleitungsposition liegt und wobei die Verbrennungsluft mit dem Brennstoff im Brennerkanal gemischt und anschließend in eine Verbrennungszone eingeleitet wird und wobei eine Kopplung zwischen Luftzahlschwankungen und Verbrennungsschwingungen weitgehend dadurch aufgebrochen wird, dass ein Helmholtzresonator an einer Resonatorposition mit dem Brennerkanal stromab der Brennstoffeinleitungsposition und stromauf der Verbrennungszone unmittelbar strömungstechnisch so verbunden ist, dass Verbrennungsschwingungen nicht bis zur Brennstoffeinleitungsposition vordringen.

Die Vorteile eines solchen Verfahrens entsprechen den obigen Ausführungen zu den Vorteilen des Brenners.

Die Erfindung wird beispielhaft und teilweise schematisch anhand der Zeichnung erläutert. Es zeigen:
- FIG 1:: Ein Verfahren zur Verringerung von Verbrennungsschwingungen
- FIG 2:: Einen Gasturbinenbrenner
- FIG 3:: Eine Gasturbine
- FIG 4:: Einen Helmholtzresonator

Gleiche Bezugszeichen haben in den verschiedenen Figuren die gleiche Bedeutung.

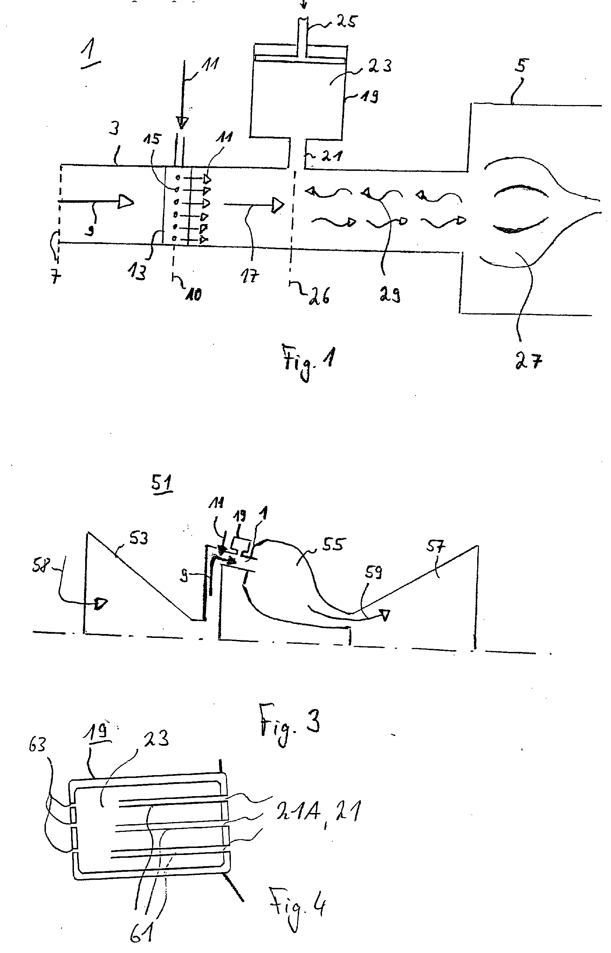

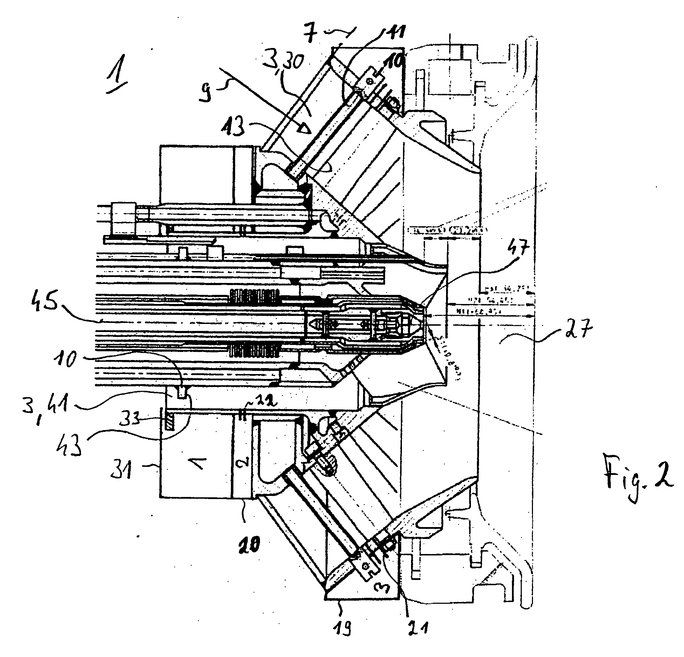

Figur 1 zeigt schematisch einen Brenner 1 und ein Verfahren zum Betrieb des Brenners 1. Der Brenner 1 weist einen Brennerkanal 3 auf. Der Brennerkanal 3 mündet in eine Brennkammer 5. An einer Lufteinleitungsposition 7 wird Verbrennungsluft 9 in den Brennerkanal 3 eingeleitet. An einer stromab der Lufteinleitungsposition 7 liegenden Brennstoffeinleitungsposition 10 wird Brennstoff 11, insbesondere Erdgas, in den Brennerkanal 3 eingeleitet. Dies geschieht über Auslassöffnungen 15 in Drallschaufeln 13, die im Brennerkanal 3 angeordnet sind und durch Erzeugung eines Rückströmgebietes zu einer Stabilisierung der Verbrennung führen. Das entstehende Gemisch 17 aus Verbrennungsluft 9 und Brennstoff 11 wird dann in der Brennkammer 5 verbrannt.

Ein Helmholtzresonator 19 ist über eine Resonatormündung 21 mit dem Brennerkanal 3 unmittelbar strömungstechnisch an einer Resonatorposition 26 verbunden. Der Helmholtzresonator 19 weist ein Resonatorvolumen 23 auf. Das Resonatorvolumen 23 ist über einen Kolben 25 einstellbar.

Bei der Verbrennung in einer Verbrennungszone 27 in der Brennkammer 5 kann es durch ungleichmäßige Hitzefreisetzung zu akustischen Pulsen kommen, die ihrerseits nach Reflexion an den umgebenden Wänden eine ungleichmäßige Hitzefreisetzung verursachen können. Dies kann bei phasenrichtiger Überlagerung zum Aufbau einer Verbrennungsschwingung 29 führen, die auch in den Brennerkanal 3 eindringt. Eine wesentliche Ursache für das Entstehen der ungleichmäßigen Hitzefreisetzung liegt in Luftzahlschwankungen, die durch akustische Störungen im Bereich der Brennstoffeinlassposition 10 verursacht werden können. An der Resonatorposition 26 werden durch den Helmholtzresonator 19 die akustischen Eigenschaften des Brennerkanals 3 so verändert, dass eine Verbrennungsschwingung 29 nicht bis zur Brennstoffeinlassposition 10 vordringt. Hierdurch wird eine Entkopplung von Luftzahlschwankungen an der Brennstoffeinlassposition 10 und Verbrennungsschwingungen 29 erreicht. Erstmals wird somit durch einen Helmholtzresonator 19 eine Ursache für das Entstehen einer Verbrennungsschwingung 29 bekämpft und nicht nur lediglich durch Absorption die Amplitude solcher Verbrennungsschwingungen 29 gedämpft.

In Figur 2 ist ein Gasturbinenbrenner 1 dargestellt. Der Brennerkanal 3 umgibt als ein Ringkanal 30 einen Zentralkanal 41. Der Ringkanal 30 ist als ein Vormischkanal ausgeführt, in dem Brennstoff 11 und Verbrennungsluft 9 vor der Verbrennung intensiv vermischt werden. Dies wird als Vormischverbrennung bezeichnet. Der Brennstoff 11 wird über hohl ausgeführte Drallschaufeln 13 in den Ringkanal 30 eingeleitet. Der Zentralkanal 41 mündet in die Verbrennungszone 27 zusammen mit einer zentralen Brennstofflanze 45, die Brennstoff 47, insbesondere Öl, über eine Dralldüse 47 zuführt. In diesem Fall werden Brennstoff 11 und Verbrennungsluft 9 erst in der Verbrennungszone 27 gemischt und man spricht von einer Diffusionsverbrennung. In den Zentralkanal 41 kann aber auch stromauf der Verbrennungszone 27 Brennstoff 11, insbesondere Erdgas, über einen Brennstoffeinlass 43 zugegeben werden.
Der Ringkanal 30 ist ringförmig von einem Helmholtzresonator 19 umgeben, der über lochförmig ausgebildete Resonatormündungen 21 mit dem Ringkanal 30 unmittelbar strömungstechnisch verbunden ist. Auch der Zentralkanal 41 ist von einem Helmholtzresonator 20 über lochförmig ausgebildete Resonatormündungen 22 mit dem Zentralkanal 41 unmittelbar strömungstechnisch verbunden. In beiden Fällen ist der jeweilige Helmholtzresonator 19,20 stromab der jeweiligen Brennstoffeinlassposition 10 angeordnet, mit der oben beschriebenen Wirkung. Ein Zusatzresonator 31 ist zur weiteren Dämpfung von Verbrennungsschwingungen 29 über eine schlitzartige Resonatormündung 33 mit dem Zentralkanal 41 unmittelbar strömungstechnisch verbunden.

In Figur 3 ist eine Gasturbine 51 abgebildet. Die Gasturbine 51 weist einen Verdichter 53, eine Ringbrennkammer 55 und ein Turbinenteil 57 auf. Luft 58 aus der Umgebung wird dem Verdichter 53 zugeleitet und dort hoch zu Verbrennungsluft 9 verdichtet. Anschließend wird die Verbrennungsluft 9 der Ringbrennkammer 55 zugeleitet. Über Gasturbinenbrenner 1 der oben beschriebenen Art wird sie dort mit Brennstoff 11 zu einem Heißgas 59 verbrannt. Das Heißgas 59 treibt das Turbinenteil 57 an.

Die Figur 4 zeigt einen Helmholtzresontor 19 mit einem Resonatorvolumen 23 und einer Resonatormündung 21, die aus mehreren Bohrungen 21A besteht. Jede der Bohrungen 21A ist über ein jeweiliges Röhrchen 61 in das Resonatorvolumen 23 fortgesetzt. Die Röhrchen 61 ragen also in das Resonatorvolumen 23 hinein. Das innere Volumen des Resonators wird dabei kaum geändert. Die äußeren Abmessungen des Resonators 19 können somit klein gehalten werden. Die Röhrchen 61 können dabei verwunden ausgeführt werden, um genügend Abstand zu den Wänden zu haben. Durch Veränderung der Länge der Röhrchen 61 kann die Dämpfungsvorrichtung auf jede beliebige Frequenz, die im Verbrennungssystem auftritt, eingestellt werden. Dabei müssen die äußeren Abmessungen des Resonators 19 und damit des Brenneinsatzes sowie die offene Gesamtquerschnittsfläche nicht geändert werden. Der Hauptvorteil: um tiefe Frequenzen. zu dämpfen, kann mit Hilfe der hineinragenden Röhrchen 61 auf eine Volumenvergrößerung des Resonators 19 verzichtet werden. Über Lufteinlassöffnungen 63 wird der Resonator 19 luftgespült. Damit ist einerseits eine Kühlung des Resonators 19 möglich, andererseits kann über die Durchflussmenge an Luft die Impedanz des Resonators 19 eingestellt werden.

### Bezugszeichenliste

1 Brenner
3 Brennerkanal
5 Brennkammer
7 Lufteinleitungsposition
9 Verbrennungsluft
10 Brennstoffeinleitungsposition 11 Brennstoff
13 Drallschaufeln
15 Auslassöffnungen
17 Gemisch
19 Helmholtzresonator
20 Helmholtzresonator Zentralkanal 22 Resonatormündung Zentralkanal 21 Resonatormündung
23 Resonatorvolumen
25 Kolben
26 Resonatorposition
27 Verbrennungszone
29 Verbrennungsschwingung
30 Ringkanal
31 Zusatzresonator
41 Zentralkanal
43 Brennstoffeinlass
45 Brennstofflanze
47 Dralldüse
39 Mündung Brennstofflanze
41 Brennermaterial
51 Gasturbine
53 Verdichter
55 Ringbrennkammer
57 Turbinenteil
58 Luft
59 Heißgas

## Patentansprüche

1. Brenner (1) mit einem Brennerkanal (3), in den Verbrennungsluft (9) an einer Lufteinleitungsposition (7) und Brennstoff (11) an einer Brennstoffeinleitungsposition (10) einleitbar sind, wobei die Brennstoffeinleitungsposition (10) stromab der Lufteinleitungsposition (7) liegt und wobei die Verbrennungsluft (9) mit dem Brennstoff (11) im Brennerkanal (3) mischbar und anschließend in eine Verbrennungszone (27) einleitbar sind,
**dadurch gekennzeichnet, dass** ein Helmholtzresonator (19) an einer Resonatorposition (26) mit dem Brennerkanal (3) stromab der Brennstoffeinleitungsposition (10) und stromauf der Verbrennungszone (27) unmittelbar strömungstechnisch so verbunden ist, dass eine Kopplung zwischen Luftzahlschwankungen und Verbrennungsschwingungen (29) weitgehend aufgebrochen wird.

2. Brenner (1) gemäß Anspruch 1, bei dem der Brennerkanal (3) als Ringkanal (30) ausgeführt ist und einen Zentralkanal (41) umgibt, durch den getrennt vom Ringkanal (30) Brennstoff (11) und Verbrennungsluft (9) der Verbrennungszone (27) zuführbar sind, wobei der Helmholtzresonator (19) den Ringkanal (30) ebenfalls ringförmig umgibt.

3. Brenner (1) gemäß Anspruch 1, bei dem der Brennerkanal (3) als Zentralkanal (41) ausgeführt ist und von einem Ringkanal (30) umgeben ist, durch den getrennt vom Zentralkanal (41) Brennstoff (11) und Verbrennungsluft (9) der Verbrennungszone (27) zuführbar sind, wobei der Helmholtzresonator (19) den Zentralkanal (41) ringförmig umgibt.

4. Brenner (1) gemäß Anspruch 3, bei dem der Ringkanal (30) mit einem weiteren, den Ringkanal (30) ringförmig umgebenden Helmholtzresonator (19) stromab einer in den Ringkanal (30) mündenden Brennstoffeinleitungsposition (10) unmittelbar strömungstechnisch verbunden ist.

5. Brenner (1) gemäß einem der vorhergehenden Ansprüche, bei dem im Brennerkanal (3) Drallschaufeln (13) stromauf der Resonatorposition (26) angeordnet sind.

6. Brenner (1) nach Anspruch 5, bei dem der Brennstoff (11) über die Drallschaufeln (13) einleitbar ist.

7. Brenner (1) nach einem der vorhergehenden Ansprüche, bei dem durch den Helmholtzresonator (19) Verbrennungsschwingungen (29) absorbierbar sind.

8. Brenner (1) nach einem der vorhergehenden Ansprüche, bei dem durch den Helmholtzresonator (19) Verbrennungsschwingungen (29) reflektierbar sind.

9. Brenner (1) nach einem der vorhergehenden Ansprüche, bei dem der Helmholtzresonator (19) ein einstellbares Resonatorvolumen (23) aufweist.

10. Brenner (1) nach einem der vorhergehenden Ansprüche, bei dem der Helmholzresonator (19) ein Resonatorvolumen (23) aufweist und über eine Resonatormündung (21) mit dem Brennerkanal (3) verbunden ist, wobei die Resonatormündung (21) durch ein Röhrchen (61) in das Resonatorvolumen (23) hinein verlängert ist.

11. Brenner (1) nach einem der vorhergehenden Ansprüche, ausgebildet als Gasturbinenbrenner.

12. Gasturbine (51) mit einem Brenner (1) nach einem der vorhergehenden Ansprüche.

13. Gasturbine (51) nach Anspruch 12 mit einer Ringbrennkammer (55).

14. Verfahren zum Betrieb eines Brenners (1) mit einem Brennerkanal (3), in den Verbrennungsluft (9) an einer Lufteinleitungsposition (7) und Brennstoff (11) an einer Brennstoffeinleitungsposition (10) eingeleitet werden, wobei die Brennstoffeinleitungsposition (10) stromab der Lufteinleitungsposition (7) liegt und wobei die Verbrennungsluft (9) mit dem Brennstoff (11) im Brennerkanal (3) gemischt und anschließend in eine Verbrennungszone (27) eingeleitet wird,
**dadurch gekennzeichnet, dass** eine Kopplung zwischen Luftzahlschwankungen und Verbrennungsschwingungen (29) weitgehend dadurch aufgebrochen wird, dass ein Helmholtzresonator (19) an einer Resonatorposition (26) mit dem Brennerkanal (3) stromab der Brennstoffeinleitungsposition (10) und stromauf der Verbrennungszone (27) unmittelbar strömungstechnisch so verbunden ist, dass Verbrennungsschwingungen (29) nicht bis zur Brennstoffeinleitungsposition (10) vordringen.
